# EUROPÄISCHE PATENTSCHRIFT

(11) **EP 3 168 949 B1**
(45) Veröffentlichungstag und Bekanntmachung des Hinweises auf die Patenterteilung: **01.07.2020**
(21) Anmeldenummer: 15194127.5
(22) Anmeldetag: 11.11.2015
(51) Int. Cl.: H02J 3/12, H02J 3/38

(54) **VERFAHREN UND VORRICHTUNG ZUR DEZENTRALEN REGELUNG VON NIEDER- UND MITTELSPANNUNGSNETZEN**
METHOD AND DEVICE FOR THE DECENTRAL REGULATION OF LOW VOLTAGE AND MEDIUM VOLTAGE NETWORKS
PROCEDE ET DISPOSITIF DE REGLAGE DÉCENTRALISÉ DE RESEAUX MOYENNE TENSION ET BASSE TENSION

(43) Veröffentlichungstag der Anmeldung: 17.05.2017
(73) Patentinhaber: SPIE SAG GmbH, 40882 Ratingen (DE)
(72) Erfinder: Stiegler, Martin, 81377 München (DE); Neusel-Lange, Nils, 42119 Wuppertal (DE); Zdrallek, Markus, 57074 Siegen (DE)
(74) Vertreter: Rohmann, Michael

(56) Entgegenhaltungen:
- EP-A1- 2 592 709
- WO-A2-2007/065135
- US-A1- 2012 310 424
- YUTAKA OTA ET AL: "Autonomous Distributed V2G (Vehicle-to-Grid) Satisfying Scheduled Charging", IEEE TRANSACTIONS ON SMART GRID, IEEE, USA, vol. 3, no. 1, 1 March 2012 (2012-03-01), pages 559-564, XP011422581, ISSN: 1949-3053, DOI: 10.1109/TSG.2011.2167993

## Beschreibung

Die Erfindung betrifft ein Verfahren und eine Vorrichtung zur Regelung von Nieder- und Mittelspannungsnetzen.

Aus der Praxis ist es bekannt, in einem Niederspannungsnetz Sensoren und Aktoren zwecks Regelung einzusetzen. Die Sensoren erfassen einen Zustand des Niederspannungsnetzes, wobei im Falle eines änderungswürdigen Zustandes des Niederspannungsnetzes über eine Kontrolleinheit mit Hilfe der Aktoren regelnd eingegriffen wird. Die Aktoren sind in der Regel leistungselektronische Schalter, welche Netzteilnehmer zum Niederspannungsnetz hinzuschalten oder von diesem trennen. Netzteilnehmer können Einspeiser, Speicher oder Verbraucher sein. Typische Verbraucher sind beispielsweise Wohnhäuser, gewerblich genutzte Gebäude oder auch Ladestationen von elektrisch betriebenen Fahrzeugen. Als Speicher kommen beispielsweise Wassertürme in Betracht. Typische Einspeiser sind Windkraftanlagen, Photovoltaikanlagen oder Biogasanlagen.

Insbesondere volatil agierende Netzteilnehmer wie Photovoltaikanlagen und Windkraftanlagen werden mit einem Sensor und einem Aktor ausgestattet, um notfalls im Falle zu großer Einspeisungen von elektrischer Energie diese vom Niederspannungsnetz zu trennen. Darüber hinaus ist es grundsätzlich aber auch denkbar, regelnd in den Stromverbrauch einzugreifen. So könnten beispielsweise Ladestationen von elektrisch betriebenen Kraftfahrzeugen verschiedene Lademodi aufweisen, welche durch die Kontrolleinheit ausgewählt werden. Durch die steuerbaren Netzteilnehmer können insbesondere Überlasten und Spannungsbandverletzungen innerhalb des Niederspannungsnetzes vermieden werden. Der intelligente Netzausbau ist somit eine kostengünstige Alternative zum konventionellen Netzausbau.

In der Folge ist es wünschenswert, den intelligenten Netzausbau auch auf die Mittelspannungsebene auszudehnen. Dies aber stellt die Regelung vor das Problem, eine sehr große und immer größer werdende Menge an Informationen zu verarbeiten. Da bereits ein einziges Niederspannungsnetz einen erheblichen Rechenaufwand zwecks Regelung der Zustände innerhalb des Niederspannungsnetzes verursacht, gilt dies erst recht für ein Mittelspannungsnetz samt angeschlossener Niederspannungsnetze. So versorgt ein Mittelspannungsnetz im Durchschnitt etwa 70 bis 80 Niederspannungsnetze. Darüber hinaus gilt es für eine derartige im Mittelspannungsnetz angeordnete Kontrolleinheit zudem die Wechselwirkungen der einzelnen Niederspannungsnetze aufeinander sowie auf das Mittelspannungsnetz selber zu berücksichtigen. Im Ergebnis bedeutet die Ausweitung der Regelung auf Mittelspannungsnetze einen erheblichen Anstieg der Datenmengen und Rechenleistungen. Mit dem aus der Praxis bekannten Verfahren könnten zwar Mittel- und Niederspannungsnetze gleichzeitig geregelt werden, doch wäre man gezwungen, auf einen erheblichen Teil der auszutauschenden Informationen zu verzichten. Beispielsweise wäre es mit dem bekannten Verfahren möglich, lediglich die wichtigsten bzw. größten Netzteilnehmer zu überwachen und zu steuern. Auf diese Art und Weise ginge aber ein erhebliches Regelungspotential verloren.

In WO 2007/065135 A2 ist der grundsätzliche Gedanke der Ausdehnung der Steuerintelligenz auf die Mittelspannungsebene offenbart. Dabei geschieht die Steuerung über Agenten bzw. Kontrolleinheiten von einzelnen Gebäuden/Unternehmen/Netzabschnitten, die per Auktionsverfahren Strom erwerben bzw. veräußern. Aufgrund der Auktionsverfahren gestaltet sich der Handel mit Strom und damit die Steuerung der Stromflüsse dezentral, wobei die beteiligten Kontrolleinheiten vor allem Informationen betreffend verfügbare bzw. benötigte Leistungswerte austauschen.

US 2012 031 0421 lehrt ebenfalls die Ausdehnung der Regelung auf die Mittelspannungsebene. Hierzu wird die Sammlung zahlreicher Daten empfohlen.

EP 2 592 709 A1 stellt ab auf die Steuerung von Niederspannungsnetzen und lässt insbesondere die Steuerung bzw. Regelung von Mittelspannungsnetzen vermissen.

Der Fachartikel der IEEE Transactions on Smart Grid, Vol. 3, No. 1, März 2012, Seiten 559 bis 560, empfiehlt eine intelligente Ladesteuerung von Elektromobilen und erwähnt, dass erneuerbare Energiequellen in das regionale Energiemanagementsystem integriert werden müssen.

Nachteilig ist bei den vorgenannten Ausführungsformen des Standes der Technik, dass die großen Mengen an Informationsflüssen nicht dahingehend gesteuert werden, dass eine nennenswerte Verringerung der auszutauschenden Daten stattfindet. Eine solche Verringerung von auszutauschenden Daten ist allerdings notwendig, um tatsächlich jeden einzelnen Aktor innerhalb sämtlicher, zugehöriger Niederspannungsnetzabschnitte ansteuern zu können zu berücksichtigen. Außerdem schweigt der vorgenannte Stand der Technik zu Störfällen, bei welchen einzelne Kontrolleinheiten ausfallen, wodurch ebenfalls Steuerungs- bzw. Regelungspotenziale verloren gehen.

Der Erfindung liegt daher die technische Aufgabe zugrunde, ein Verfahren anzugeben, mit der Nieder- und Mittelspannungsnetze geregelt werden können, ohne dass dabei Regelungspotentiale ungenutzt bleiben müssen. Der Erfindung liegt weiterhin die technische Aufgabe zugrunde, eine entsprechende Vorrichtung zur Regelung von Nieder- und Mittelspannungsnetzen anzugeben.

Zur Lösung der technischen Aufgabe lehrt die Erfindung ein Verfahren zur Regelung von Nieder- und Mittelspannungsnetzen, wobei wenigstens zwei Teilnetzen eines Hauptnetzes jeweils wenigstens eine untere Kontrolleinheit zugeordnet wird, wobei eine obere Kontrolleinheit dem Hauptnetz zugeordnet wird, wobei das Hauptnetz ein Mittel- oder Niederspannungsnetz ist, wobei die Teilnetze Niederspannungsnetze oder Niederspannungsnetzabschnitte sind, wobei die unteren Kontrolleinheiten jeweils mit einer Mehrzahl von unteren Aktoren verbunden sind, welche untere Aktoren den Zustand des jeweiligen Teilnetzes verändern können, wobei die unteren Kontrolleinheiten Daten der jeweils zugehörigen unteren Aktoren zusammenfassen, wobei die zusammengefassten Daten von den unteren Kontrolleinheiten an die obere Kontrolleinheit übermittelt werden, wobei die obere Kontrolleinheit einen Zustand des Hauptnetzes bewertet,
wobei die obere Kontrolleinheit im Falle eines änderungswürdigen Zustands des Hauptnetzes an wenigstens eine ausgesuchte untere Kontrolleinheit einen Änderungsbefehl zur Änderung des Zustands des zugehörigen Teilnetzes ausgibt, wobei eine Änderung des Zustands des zugehörigen Teilnetzes mittels eines unteren Aktors zugleich auch eine Änderung des Zustands des Hauptnetzes bewirkt und wobei die ausgesuchte untere Kontrolleinheit anhand der zusammengefassten Daten ausgesucht wird,
wobei der Änderungsbefehl wenigstens einen Leistungswert umfasst, wobei der Änderungsbefehl neben dem Leistungswert eine Aussage darüber enthält, ob das Teilnetz den besagten Leistungswert aufnehmen oder an das Hauptnetz abgeben soll, wobei die ausgesuchte untere Kontrolleinheit auf den Änderungsbefehl hin entscheidet, welche Änderungen innerhalb des Teilnetzes zur Änderung des Zustandes des Hauptnetzes vorgenommen werden, wobei bei einem Ausfall der unteren Kontrolleinheit die obere Kontrolleinheit mit untergeordneten Elementen der unteren Kontrolleinheit kommuniziert.

Hierbei meint der Begriff "Niederspannungsnetz" vorzugsweise die unterste Netzebene, welche bis zum Hausanschluss reicht. Insbesondere erstreckt sich der Bereich der Niederspannung bis 1 Kilovolt und beträgt in Europa zumeist 230 Volt (einphasig) bzw. 400 Volt (dreiphasig). Der Begriff "Mittelspannungsnetz" meint vorzugsweise diejenige Netzebene, welche den nächsthöheren Spannungspegel im Vergleich zum Spannungspegel des Niederspannungsnetzes aufweist. Mit anderen Worten ist das Mittelspannungsnetz mittels eines oder mehrerer Transformatoren von dem Niederspannungsnetz getrennt. Diese Transformatoren sind in Ortsnetzstationen angeordnet. Die Mittelspannung erstreckt sich vorzugsweise oberhalb von einem Kilovolt.

Der Ausdruck "Kontrolleinheit" ist insbesondere als ein Gerät mit Recheneinheit zur Regelung von Netzzuständen zu verstehen. Die Kontrolleinheit ist vorzugsweise mit Sensoren verbunden, welche Zustände des der Kontrolleinheit zugeordneten Teilnetzes bzw. Hauptnetzes erfassen. Vorzugsweise ist die obere Kontrolleinheit mit oberen Sensoren verbunden. Es ist bevorzugt, dass die untere Kontrolleinheit mit unteren Sensoren verbunden ist.

Der Begriff "Aktor" meint bevorzugt einen Leistungsschalter an einem Netzteilnehmer oder Schalter zur Ansteuerung von Netzinfrastruktur. "Schalter" im Sinne der Erfindung umfasst u. a. klassische Ein-Aus-Schalter, Stufenschalter sowie stufenlose Schaltung. Der Ausdruck "Netzinfrastruktur" ist insbesondere als elektrische Leitungen und Transformatoren des Stromnetzes zu verstehen. Hierunter fallen beispielsweise Schalter zur Schließung von offenen Maschen eines Teil- oder Hauptnetzes. Hierunter fallen ferner regelbare Transformatoren, welche beispielsweise über Stufenschalter angesteuert werden können.

Der Ausdruck "zusammengefasste Daten bezüglich der unteren Aktoren" meint vorzugsweise Leistungswerte und insbesondere die Addition von Leistungswerten der den Aktoren zugeordneten Netzteilnehmer. Vorzugsweise wird in den zusammengefassten Daten unterschieden zwischen Leistungserhöhungspotential, welches diejenige elektrische Leistung meint, um welche die in dem jeweiligen Teilnetz zirkulierende Leistung noch erhöht werden kann. Vorzugsweise wird weiter unterschieden in Leistungsverringerungspotential, welches angibt, um wieviel die zirkulierende elektrische Leistung noch verringert werden kann.

Der Erfindung liegt die Erkenntnis zugrunde, dass eine vollumfängliche und auch kleinere Netzteilnehmer umfassende gleichzeitige Regelung von Nieder- und Mittelspannungsnetzen nur dann handhabbar ist, wenn die obere Kontrolleinheit im Regelfall keinen direkten Kontakt zu den unteren Aktoren des Teilnetzes hat. Stattdessen liefert die untere Kontrolleinheit lediglich zusammengefasste Daten über die unteren Aktoren, so dass die obere Kontrolleinheit die untere Kontrolleinheit gewissermaßen als einen *Blackbox*-Aktor betrachtet. Hierdurch wird eine dezentrale Kommunikation ermöglicht, welche den Regelungsaufwand auf die obere und auf die untere Kontrolleinheit ungefähr gleichmäßig verteilt. Durch die in etwa gleichmäßige Aufteilung des Regelungsaufwandes auf die verschiedenen Kontrolleinheiten ist es möglich, gleichzeitig Nieder- und Mittelspannungsnetze zu regeln, ohne dass dabei auf das Regelungspotential kleinerer Netzteilnehmer, insbesondere in den Niederspannungsnetzen, verzichtet werden muss. Die Effizienz des intelligenten Netzausbaus wird hierdurch erheblich gesteigert und stellt eine umso interessantere Alternative zum konventionellen Netzausbau dar.

Es ist bevorzugt, dass die obere Kontrolleinheit mehrere räumlich aufgelöste Zustände des Hauptnetzes erfasst. Vorzugsweise ist die obere Kontrolleinheit mit mehreren oberen Sensoren verbunden. Zweckmäßigerweise sind der oder die oberen Sensoren in dem Hauptnetz angeordnet. Es ist bevorzugt, dass im Falle einer funktionsfähigen unteren Kontrolleinheit der Änderungsbefehl insbesondere nicht auf die Ansteuerung eines oder mehrerer unterer Aktoren bezogen ist.

Als Maßnahmen zur Änderung des Zustandes des Teilnetzes und damit des Hauptnetzes kommen grundsätzlich zwei Optionen in Betracht. Die erste Option betrifft Aktoren, welche Teile der Netzinfrastruktur ansteuern. Diese sind beispielsweise regelbare Transformatoren oder Schalter, welche die Netztopologie verändern. Schalter zur Veränderung der Netztopologie sind beispielsweise Schalter, welche eine Netzmasche öffnen bzw. schließen können.

Vorteilhafterweise ist eine Maßnahme zur Änderung des Zustandes des Teilnetzes bzw. Hauptnetzes das Ansteuern von Netzteilnehmern. Es ist zweckmäßig, dass die untere Kontrolleinheit entscheidet, ob ein Speicher aufgeladen oder entleert wird. Es liegt im Rahmen der Erfindung, dass Verbraucher zu dem Teilnetz hinzugeschaltet oder von diesem getrennt werden. Praktischerweise werden Einspeiser und insbesondere volatile Einspeiser zu dem Teilnetz hinzugeschaltet oder von diesem getrennt. Als Einspeiser kommen insbesondere Photovoltaikanlagen, Windkraftanlagen, Mini-Blockheizkraftwerke oder auch Biogasanlagen in Betracht. Als Verbraucher kommen beispielsweise Ladestationen von elektrisch betriebenen Kraftfahrzeugen, Klimaanlagen oder Wärmepumpen in Frage.

Gemäß einer ganz besonders bevorzugten Ausführungsform umfassen die zusammengefassten Daten berechnete Steuerkapazitätsreserven des jeweiligen Teilnetzes. Es ist zweckmäßig, dass die zusammengefassten Daten einen oder mehrere Leistungswerte aufweisen. Der eine oder die mehreren Leistungswerte sind zweckmäßigerweise durch Addition gleichartiger Leistungswerte entstanden. Beispielsweise gibt ein erster Leistungswert Auskunft über die elektrische Leistung, welche zusätzlich noch mittels hinzuschaltbarer Einspeiser in das Teilnetz eingespeist werden kann. Es ist zweckmäßig, dass die zusammengefassten Daten einen Leistungswert umfassen, welcher eine elektrische Leistung angibt, welche die bisher an das Teilnetz angeschlossenen Einspeiser repräsentiert. Es liegt im Rahmen der Erfindung, dass ein Leistungswert die elektrische Leistung der an das Teilnetz angeschlossenen steuerbaren Verbraucher beziffert. Es ist bevorzugt, dass ein Leistungswert die vom Teilnetz getrennten steuerbaren Verbraucher repräsentiert. Gemäß einer besonders bevorzugten Ausführungsform beziffert ein Leistungswert diejenige elektrische Leistung, welche von dem Teilnetz noch in das Mittelspannungsnetz eingespeist werden kann. Es ist sehr bevorzugt, dass ein Leistungswert diejenige elektrische Leistung beziffert, welche das Teilnetz aus dem Hauptnetz noch aufnehmen kann.

Gemäß einer besonders bevorzugten Ausführungsform berücksichtigt die untere Kontrolleinheit hinterlegte Informationen über Netzteilnehmer. Hinterlegte Informationen von Netzteilnehmern beziehen sich insbesondere auf die maximale Leistung, welche von den jeweiligen Netzteilnehmern aufgenommen bzw. eingespeist werden kann. Es ist zweckmäßig, dass die untere Kontrolleinheit Wetterinformationen und insbesondere Wettervorhersagen berücksichtigt.

Praktischerweise werden aus den Wetterinformationen und den hinterlegten Informationen bezüglich der Netzteilnehmer Leistungswerte berechnet. Gemäß einer ganz besonders bevorzugten Ausführungsform berücksichtigt die untere Kontrolleinheit Informationen bezüglich der Netztopologie des Teilnetzes. Vorzugsweise werden aus den Informationen bezüglich der Netztopologie Randbedingungen, berechnet die die Ansteuerung von Netzteilnehmern im Hinblick auf Überlastgrenzen von Stromleitungen sowie auf Spannungsbandverletzungen berücksichtigen. Vorzugsweise werden die Steuerkapazitäten in Form der insgesamt ansteuerbaren Leistungswerte mit den Randbedingungen modifiziert, so dass effektive Steuerkapazitäten berechnet werden. Vorzugsweise umfassen die zusammengefassten Daten berechnete effektive Steuerkapazitätsreserven des jeweiligen Teilnetzes. Die berechneten effektiven Steuerkapazitätsreserven geben vorteilhafterweise diejenige Leistung an, welche aus dem Teilnetz in das Hauptnetz oder umgekehrt fließen kann, ohne dass in dem Teilnetz Überlastsituationen oder Spannungsbandverletzungen auftreten.

Es ist bevorzugt, dass 5% bis 50%, vorzugsweise 7% bis 30% und besonders vorzugsweise 10% bis 20% von Netzteilnehmerknoten einen Sensor zur Erfassung eines Zustands des Teilnetzes bzw. des Hauptnetzes aufweisen. Der Begriff "Netzteilnehmerknoten" meint diejenigen Netzknoten, an welchen unmittelbar ein Einspeiser, Verbraucher oder Speicher angeschlossen ist. Dabei meint der Ausdruck "unmittelbar", dass zwischen dem jeweiligen Netzteilnehmer und dem Netzteilnehmerknoten kein weiterer Netzknoten liegt.

. Der Ausdruck "untergeordnete Elemente" meint untere Sensoren, untere Aktoren sowie den unteren Kontrolleinheiten untergeordnete Kontrolleinheiten. Dies ermöglicht einen Durchgriff der oberen Kontrolleinheit im Falle eines Ausfalls der unteren Kontrolleinheit auf die untergeordneten Elemente und garantiert somit eine Netzstabilität des Teilnetzes auch im Falle eines Ausfalls der unteren Kontrolleinheit.

Es liegt im Rahmen der Erfindung, dass die obere Kontrolleinheit im Falle eines änderungswürdigen Zustands des Hauptnetzes entscheidet, welche Maßnahmen innerhalb des Hauptnetzes zur Änderung des Zustandes des Hauptnetzes ergriffen werden. Praktischerweise entscheidet die untere Kontrolleinheit im Falle eines änderungswürdigen Zustands des Teilnetzes, welche Maßnahmen innerhalb des Teilnetzes zur Änderung des Zustandes des Teilnetzes ergriffen werden. Vorzugsweise ist die obere Kontrolleinheit mit oberen Sensoren und vorzugsweise mit oberen Aktoren verbunden. Es ist zweckmäßig, dass die oberen Sensoren bzw. die oberen Aktoren mit Netzteilnehmern im Hauptnetz verbunden sind.

Vorteilhafterweise ist die obere Kontrolleinheit mit einem Umspannwerk oder einer Ortsnetzstation verbunden. Es ist bevorzugt, dass die untere Kontrolleinheit mit einer Ortsnetzstation oder mit einem Kabelverteilerschrank verbunden ist. Es ist zweckmäßig, dass die obere Kontrolleinheit mit einem Umspannwerk verbunden ist, wenn die untere Kontrolleinheit mit einer Ortsnetzstation verbunden ist. Gemäß einer anderen Ausführungsform ist es zweckmäßig, dass die obere Kontrolleinheit mit einer Ortsnetzstation verbunden ist.

Es liegt im Rahmen der Erfindung, dass eine Mehrzahl an oberen Kontrolleinheiten vorgesehen ist, wobei die oberen Kontrolleinheiten einer Leitwarte zugeordnet sind. Gemäß einer anderen Ausführungsform ist die obere Kontrolleinheit ein Teil einer Leitwarte. Der Ausdruck "Leitwarte" meint die oberste regelungstechnische Instanz, welche insbesondere Arbeitsplätze für Personal bereitstellt.

Es ist zweckmäßig, dass wenigstens einer unteren Kontrolleinheit untergeordnete Kontrolleinheiten zugeordnet sind. Die untergeordneten Kontrolleinheiten sind vorzugsweise an Knotenpunkten innerhalb des Teilnetzes angeordnet. Es ist zweckmäßig, dass die untergeordneten Kontrolleinheiten in Kabelverteilerschränken angebracht sind. Praktischerweise wird ein Netzabschnitt des Teilnetzes dem Kabelverteilerschrank bzw. der untergeordneten Kontrolleinheit zugeordnet. Es ist zweckmäßig, dass die untere Kontrolleinheit mit der untergeordneten Kontrolleinheit auf gleiche Art und Weise kommuniziert wie die obere Kontrolleinheit mit unteren Kontrolleinheit.

Es liegt im Rahmen der Erfindung, dass wenigstens einem Netzteilnehmer eine Teilnehmerkontrolleinheit zugeordnet ist. Vorzugsweise ist insbesondere industriellen Verbrauchern eine Teilnehmerkontrolleinheit zugeordnet. Praktischerweise regelt die Teilnehmerkontrolleinheit elektrische Leistungsflüsse des Netzteilnehmers derart, dass eine Optimierung der Kosten für elektrische Energie angestrebt wird. Insbesondere ist vorgesehen, dass Netzteilnehmer mittels der Teilnehmerkontrolleinheit an einer Strombörse teilnehmen. Gemäß einer ganz besonders bevorzugten Ausführungsform sind die Teilnehmerkontrolleinheiten auch durch die untergeordneten, unteren bzw. oberen Kontrolleinheiten ansteuerbar.

Es ist vorteilhaft, dass eine Strombörse vorgesehen ist. Vorzugsweise unterbinden die untergeordneten, unteren bzw. oberen Kontrolleinheiten eine Reaktion der Teilnehmerkontrolleinheiten auf Strompreisänderungen, wenn dies der Netzstabilität widerspricht. Zweckmäßigerweise reagieren die Teilnehmerkontrolleinheiten vorrangig auf Änderungsbefehle der untergeordneten, unteren bzw. oberen Kontrolleinheiten und nachrangig auf die Anreize durch die Strombörse. Es ist zweckmäßig, dass die Teilnehmerkontrolleinheiten dann auf die Strombörse reagieren, soweit dies nicht einem Änderungsbefehl zuwiderläuft.

Zur Lösung des technischen Problems lehrt die Erfindung eine Vorrichtung zur Regelung von Nieder- und Mittelspannungsnetzen, insbesondere nach dem erfindungsgemäßen Verfahren, wobei wenigstens zwei Teilnetzen eines Hauptnetzes jeweils wenigstens eine untere Kontrolleinheit zugeordnet ist, wobei eine obere Kontrolleinheit dem Hauptnetz zugeordnet wird, wobei das Hauptnetz ein Mittel- oder Niederspannungsnetz ist, wobei die Teilnetze Niederspannungsnetze oder Niederspannungsnetzabschnitte sind, wobei die unteren Kontrolleinheiten jeweils mit einer Mehrzahl von unteren Aktoren verbunden sind, welche unteren Aktoren den Zustand des jeweiligen Teilnetzes verändern können, wobei die unteren Kontrolleinheiten ausgebildet sind, Daten der zugehörigen unteren Aktoren zusammenzufassen und an die obere Kontrolleinheit zu übermitteln, wobei die obere Kontrolleinheit ausgebildet ist, einen Zustand des Hauptnetzes zu bewerten,
wobei die obere Kontrolleinheit ausgebildet ist, im Falle eines änderungswürdigen Zustands des Hauptnetzes an wenigstens einer ausgesuchte untere Kontrolleinheit einen Änderungsbefehl zur Änderung des Zustandes des zugehörigen Teilnetzes auszugeben, wobei eine Änderung des Zustands des zugehörigen Teilnetzes mittels eines unteren Aktors zugleich auch eine Änderung des Zustands des Hauptnetzes bewirkt und wobei die ausgesuchte untere Kontrolleinheit anhand der zusammengefassten Daten ausgesucht wird, wobei der Änderungsbefehl wenigstens einen Leistungswert umfasst, wobei der Änderungsbefehl neben dem Leistungswert eine Aussage darüber enthält, ob das Teilnetz den Leistungswert eine Aussage darüber enthält, ob das Teilnetz den Leistungswert aufnehmen oder an das Hauptnetz abgeben soll, wobei die ausgesuchte untere Kontrolleinheit ausgebildet ist, auf den Änderungsbefehl hin zu entscheiden, welche Änderungen innerhalb des Teilnetzes zur Änderung des Zustandes des Hauptnetzes vorgenommen werden, wobei die obere Kontrolleinheit und die untere Kontrolleinheit derart ausgebildet sind, dass bei einem Ausfall der unteren Kontrolleinheit die obere Kontrolleinheit mit untergeordneten Elementen der unteren Kontrolleinheit kommuniziert.

Nachfolgend wird die Erfindung anhand einer lediglich ein Ausführungsbeispiel darstellenden schematischen Zeichnung erläutert. Es zeigen:
- **Fig. 1**: eine schematische Darstellung eines erfindungsgemäß ausgerüsteten Mittelspannungsnetzes und
- **Fig. 2**: eine schematische Darstellung eines erfindungsgemäß ausgerüsteten Niederspannungsnetzes.

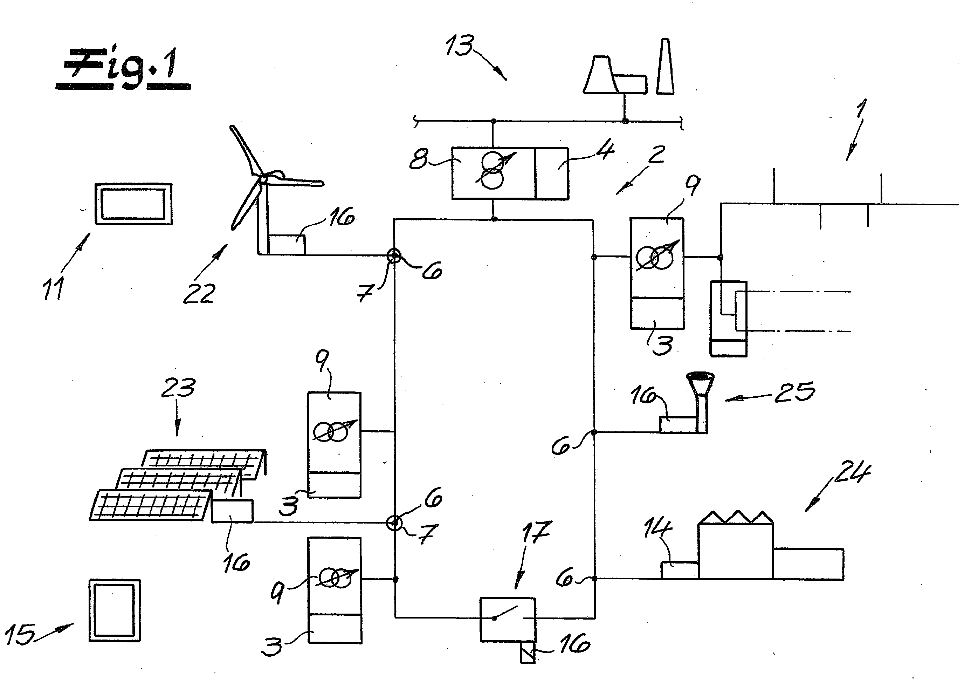

In Fig. 1 ist zu erkennen, dass ein Umspannwerk 8 die elektrische Energie von einem Hochspannungsnetz 13 kommend auf ein Mittelspannungsniveau umwandelt und in ein Hauptnetz 2 in Form eines Mittelspannungsnetzes einspeist. Das Umspannwerk 8 weist eine obere Kontrolleinheit 4 auf, welche den Spannungspegel sowie die Ströme am Ausgang des Umspannwerkes 8 erfasst. Außerdem ist die obere Kontrolleinheit 4 mit einem Stufenschalter eines Transformators des Umspannwerkes 8 verbunden.

Das in Fig. 1 gezeigte Hauptnetz 2 umfasst verschiedene Netzteilnehmer in Form von Einspeisern 22, 23, Speichern 25 und Verbrauchern 24. Die Netzteilnehmer sind über Netzteilnehmerknoten 6 mit dem Hauptnetz 2 verbunden. Darüber hinaus enthält das Hauptnetz 2 einen Schalter 17 zum Schließen einer Masche des Hauptnetzes 2. Schließlich umfasst das Hauptnetz 2 noch den mittelspannungsseitigen Teil von Ortsnetzstationen 9. Die Ortsnetzstationen 9 weisen jeweils eine untere Kontrolleinheit 3 auf.

Volatile Netzteilnehmer wie Windkraftanlagen 22 oder Solarkraftwerke 23 können über einen oberen Aktor 16 zu dem Hauptnetz 2 vollständig bzw. in Teilen hinzugeschaltet oder von diesem getrennt werden. Obere Sensoren 7 überwachen insbesondere die von den volatilen Netzteilnehmern erzeugten bzw. verbrauchten Leistungen. Leistungsintensive Verbraucher wie Industrieanlagen 24 sind mit einer Teilnehmerkontrolleinheit 14 ausgerüstet, welche Teilnehmerkontrolleinheit 14 innerhalb des jeweiligen Verbrauchers die Energienutzung optimiert. Wassertürme 25 können in ihrer Eigenschaft als Speicher sowohl Leistung abgeben als auch aufnehmen und ebenfalls über einen Aktor 16 angesteuert werden.

Eine Leitwarte 11 ist mit der oberen Kontrolleinheit 4 sowie mit weiteren nicht dargestellten oberen Kontrolleinheiten 4 verbunden. In der Leitwarte 11 laufen die Informationen aus den Hauptnetzen 2 sowie aus dem Hochspannungsnetz 13 zusammen. Die Leitwarte 11 ist darüber hinaus mit einer Strombörse 15 verbunden. Schließlich empfängt die Leitwarte 11 Informationen von verschiedenen Diensten und insbesondere Wettervorhersagen.

Die obere Kontrolleinheit 4 ist mittels Funk mit den oberen Sensoren 7, mit den oberen Aktoren 16, mit der Teilnehmerkontrolleinheit 14 und mit den unteren Kontrolleinheiten 3 verbunden. Hierdurch kann die obere Kontrolleinheit 4 Netzzustands-Informationen insbesondere von den oberen Sensoren 7 sowie von den unteren Kontrolleinheiten 3 empfangen. In der Folge ist die Bewertung eines Zustands des Hauptnetzes 2 möglich.

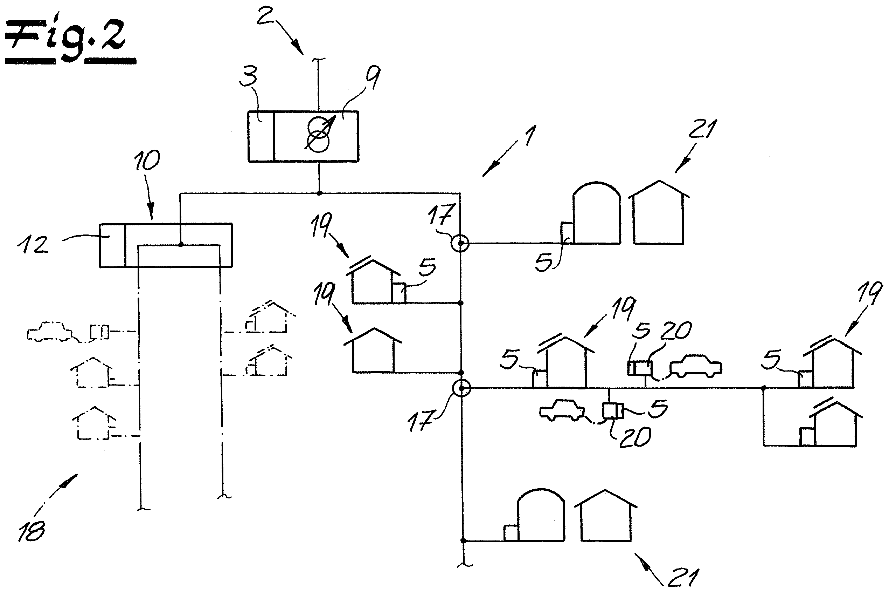

In Fig. 1 ist mittels des Bezugszeichens 1 ein Teilnetz in Form eines Niederspannungsnetzes angedeutet, welches Teilnetz 1 in Fig. 2 ausführlich dargestellt ist. Die Ortsnetzstation 9 wandelt die elektrische Energie von einem Mittelspannungs- auf ein Niederspannungsniveau um. Die untere Kontrolleinheit 3 erfasst den Spannungspegel sowie die abgehenden Ströme am niederspannungsseitigen Ausgang der Ortsnetzstation 9. Die untere Kontrolleinheit 3 ist ferner mit einem Stufenschalter des Transformators der Ortsnetzstation 9 verbunden.

Der unteren Kontrolleinheit 3 sind einige Netzteilnehmer direkt zugeordnet. Hierunter fallen die schematisch dargestellten Häuser 19, Ladestationen 20 für elektrisch betriebene Kraftfahrzeuge sowie landwirtschaftliche Betriebe 21. Einige der Häuser 19 weisen symbolisch dargestellte Photovoltaikanlagen auf, wohingegen die landwirtschaftlichen Betriebe 21 Biogasanlagen umfassen. Die Photovoltaikanlagen, die Ladestationen 20 und die Biogasanlagen sind über untere Aktoren 5 in Form von Schaltern mit dem Teilnetz 1 verbunden. Die unteren Aktoren 5 können somit die Netzteilnehmer zum Teilnetz 1 hinzuschalten oder vom Teilnetz 1 trennen. Die unteren Aktoren 5 sind außerdem mit der unteren Kontrolleinheit 3 mittels Powerline verbunden, wodurch eine Kommunikation zwischen der unteren Kontrolleinheit 3 und den unteren Aktoren 5 stattfinden kann. Netzteilnehmerknoten 6 der Biogasanlagen werden mittels unterer Sensoren 17 hinsichtlich Strom und Spannung überwacht.

Das Teilnetz 1 in Form eines Niederspannungsnetzes weist ferner einen Kabelverteilerschrank 10 auf, welcher eine untergeordnete Kontrolleinheit 12 enthält. Die dem Kabelverteilerschrank 10 zugeordneten Netzteilnehmer sind der Übersichtlichkeit halber nur angedeutet dargestellt und bilden einen Teilnetzabschnitt 18.

Im Folgenden wird das erfindungsgemäße Verfahren näher erläutert. Durch die Verbindung der unteren Kontrolleinheit 3 mit den unteren Aktoren 5 kann die untere Kontrolleinheit 3 Steuerkapazitätsreserven der dem Teilnetz 1 zugeordneten steuerbaren Netzteilnehmer berechnen. Anhand von Wetterinformationen sowie über jeweils hinterlegte Informationen zu den Netzteilnehmern kann die untere Kontrolleinheit 3 Steuerkapazitätsreserven berechnen. Aus hinterlegten Informationen bezüglich Netztopologie und Leistungsfähigkeit einzelner Abschnitte des Teilnetzes 1 ergeben sich ferner Randbedingungen für die effektiven Steuerkapazitätsreserven. Die untere Kontrolleinheit 3 übermittelt die effektiven Steuerkapazitätsreserven sowie Informationen über einen Zustand des Teilnetzes 1 an die obere Kontrolleinheit 4.

Die obere Kontrolleinheit 4 bewertet einen Zustand des Hauptnetzes 2 insbesondere unter Nutzung der oberen Sensoren 7 sowie unter Auswertung der von den unteren Kontrolleinheiten 3 zur Verfügung gestellten Informationen. Im Übrigen nutzt die obere Kontrolleinheit 4 die Strom- und Spannungsmessungen am Ausgang des Umspannwerkes 8. Sollte der von der oberen Kontrolleinheit 4 bewertete Zustand des Hauptnetzes 2 änderungswürdig sein, so kann die obere Kontrolleinheit 4 auf die oberen Aktoren 16 zugreifen.

Die obere Kontrolleinheit 4 kann aber auch an wenigstens eine ausgesuchte untere Kontrolleinheit 3 einen Änderungsbefehl zur Änderung des Zustands des zugehörigen Teilnetzes 1 ausgeben. Der Änderungsbefehl gibt der unteren Kontrolleinheit 3 vor, wieviel zusätzliche Leistung von dem Teilnetz 1 aufgenommen bzw. abgegeben werden soll. Der Änderungsbefehl lässt insbesondere offen, auf welche Art und Weise dies zu erreichen ist.

Die obere Kontrolleinheit 4 sucht sich anhand der von den unteren Kontrolleinheiten 3 zur Verfügung gestellten effektiven Steuerkapazitätsreserven eine oder mehrere der unteren Kontrolleinheiten 3 aus, welche einen Änderungsbefehl erhalten. Die ausgesuchte untere Kontrolleinheit 3 entscheidet daraufhin selbständig, welche Maßnahmen innerhalb des zugehörigen Teilnetzes 1 ergriffen werden. In der Folge kann der änderungswürdige Zustand des Hauptnetzes 2 auch von den unteren Kontrolleinheiten 3 wieder in einen unkritischeren Zustand zurückgeregelt werden.

Im Übrigen kann bei einem Ausfall der unteren Kontrolleinheit 3 die obere Kontrolleinheit 4 ausnahmsweise mit den der unteren Kontrolleinheit 3 zugeordneten nachgeordneten Elementen 5, 12, 17 kommunizieren. Hierdurch wird ein kurzzeitiger Durchgriff erreicht, um in dem betroffenen Teilnetz 1 weiterhin ein großes Maß an Netzstabilität aufrechtzuerhalten.

Die lediglich angedeuteten Netzteilnehmer des Teilnetzabschnittes 18 weisen nicht dargestellte Aktoren sowie Sensoren auf, welche mit der untergeordneten Kontrolleinheit 12 verbunden sind. Somit kann die untergeordnete Kontrolleinheit 12 die effektiven Steuerkapazitätsreserven des Teilnetzabschnittes 18 berechnen. Die effektiven Steuerkapazitätsreserven des Teilnetzabschnittes 18 stellt die untergeordnete Kontrolleinheit 12 der unteren Kontrolleinheit 3 zur Verfügung. Auf diese Art und Weise betrachtet die untere Kontrolleinheit 3 ihrerseits die untergeordnete Kontrolleinheit 12 als einen unteren Aktor. Dies erlaubt eine Kommunikation zwischen unterer Kontrolleinheit 3 und untergeordneter Kontrolleinheit 12, wie sie bereits zwischen der oberen Kontrolleinheit 4 und der unteren Kontrolleinheit 3 beschrieben wurde. In beiden Fällen betrachtet die jeweils übergeordnete Kontrolleinheit 4, 3 die jeweils hierarchisch darunter liegende Kontrolleinheit 3, 12 als einen Blackbox-Aktor.

## Patentansprüche

1. Verfahren zur Regelung von Nieder- und Mittelspannungsnetzen, wobei wenigstens zwei Teilnetzen (1) eines Hauptnetzes (2) jeweils mindestens eine untere Kontrolleinheit (3) zugeordnet wird, wobei eine obere Kontrolleinheit (4) dem Hauptnetz (2) zugeordnet wird, wobei das Hauptnetz (2) ein Mittel- oder Niederspannungsnetz ist, wobei die Teilnetze (1) Niederspannungsnetze oder Niederspannungsnetzabschnitte sind, wobei die unteren Kontrolleinheiten (3) jeweils mit einer Mehrzahl von unteren Aktoren (5) verbunden sind, welche unteren Aktoren (5) den Zustand des jeweiligen Teilnetzes (1) verändern können, wobei die unteren Kontrolleinheiten (3) Daten der jeweils zugehörigen unteren Aktoren (5) zusammenfassen, wobei die zusammengefassten Daten von den unteren Kontrolleinheiten (3) an die obere Kontrolleinheit (4) übermittelt werden, wobei die obere Kontrolleinheit (4) einen Zustand des Hauptnetzes (2) bewertet,
**dadurch gekennzeichnet, dass**
die obere Kontrolleinheit (4) im Falle eines änderungswürdigen Zustands des Hauptnetzes (2) an wenigstens eine ausgesuchte untere Kontrolleinheit (3) einen Änderungsbefehl zur Änderung des Zustands des zugehörigen Teilnetzes (1) ausgibt, wobei eine Änderung des Zustands des zugehörigen Teilnetzes (1) mittels eines unteren Aktors (5) zugleich auch eine Änderung des Zustands des Hauptnetzes (2) bewirkt und wobei die ausgesuchte untere Kontrolleinheit (3) anhand der zusammengefassten Daten ausgesucht wird,
wobei der Änderungsbefehl wenigstens einen Leistungswert umfasst, wobei der Änderungsbefehl neben dem Leistungswert eine Aussage darüber enthält, ob das Teilnetz (1) den Leistungswert aufnehmen oder an das Hauptnetz (2) abgeben soll,
wobei die ausgesuchte untere Kontrolleinheit (3) auf den Änderungsbefehl hin entscheidet, welche Änderungen innerhalb des Teilnetzes (1) zur Änderung des Zustands des Hauptnetzes (2) vorgenommen werden,
wobei bei einem Ausfall der unteren Kontrolleinheit (3) die obere Kontrolleinheit (4) mit untergeordneten Elementen (5, 7, 12) der unteren Kontrolleinheit (3) kommuniziert.

2. Verfahren nach Anspruch 1, wobei die zusammengefassten Daten berechnete Steuerkapazitätsreserven des jeweiligen Teilnetzes (1) umfassen.

3. Verfahren nach einem der Ansprüche 1 oder 2, wobei 5% bis 50%, vorzugsweise 7% bis 30% und besonders vorzugsweise 10% bis 20% von Netzteilnehmerknoten (6) einen Sensor (7) zur Erfassung eines Zustands des Teilnetzes (1) bzw. des Hauptnetzes (2) aufweisen.

4. Verfahren nach einem der Ansprüche 1 bis 3, wobei die obere Kontrolleinheit (4) im Falle eines änderungswürdigen Zustands des Hauptnetzes (2) entscheidet, welche Maßnahmen innerhalb des Hauptnetzes (2) zur Änderung des Zustandes des Hauptnetzes (2) ergriffen werden.

5. Verfahren nach einem der Ansprüche 1 bis 4, wobei die obere Kontrolleinheit (4) mit einem Umspannwerk (8) oder einer Ortsnetzstation (9) verbunden ist.

6. Verfahren nach einem der Ansprüche 1 bis 5, wobei die untere Kontrolleinheit (3) mit einer Ortsnetzstation (9) oder mit einem Kabelverteilerschrank (10) verbunden ist.

7. Verfahren nach einem der Ansprüche 1 bis 6, wobei eine Mehrzahl an oberen Kontrolleinheiten (4) vorgesehen ist, wobei die oberen Kontrolleinheiten (4) einer Leitwarte (11) zugeordnet sind.

8. Verfahren nach einem der Ansprüche 1 bis 7, wobei wenigstens einer unteren Kontrolleinheit (3) untergeordnete Kontrolleinheiten (12) zugeordnet sind.

9. Verfahren nach einem Ansprüche 1 bis 8, wobei wenigstens ein Netzteilnehmer eine Teilnehmerkontrolleinheit (14) aufweist.

10. Verfahren nach einem der Ansprüche 1 bis 9, wobei eine Strombörse vorgesehen ist.

11. Vorrichtung zur Regelung von Nieder- und Mittelspannungsnetzen, wobei wenigstens zwei Teilnetzen (1) eines Hauptnetzes (2) jeweils wenigstens eine untere Kontrolleinheit (3) zugeordnet ist, wobei eine obere Kontrolleinheit (4) dem Hauptnetz (2) zugeordnet wird, wobei das Hauptnetz (2) ein Mittel- oder Niederspannungsnetz ist, wobei die Teilnetze (1) Niederspannungsnetze oder Niederspannungsnetzabschnitte sind, wobei die unteren Kontrolleinheiten (3) jeweils mit einer Mehrzahl von unteren Aktoren (5) verbunden sind, welche unteren Aktoren (5) den Zustand des jeweiligen Teilnetzes (1) verändern können, wobei die unteren Kontrolleinheiten (3) ausgebildet sind, Daten der zugehörigen unteren Aktoren (5) zusammenzufassen und an die obere Kontrolleinheit (4) zu übermitteln, wobei die obere Kontrolleinheit (4) ausgebildet ist, einen Zustand des Hauptnetzes (2) zu bewerten,
**dadurch gekennzeichnet, dass**
die obere Kontrolleinheit (4) ausgebildet ist, im Falle eines änderungswürdigen Zustandes des Hauptnetzes (2) an wenigstens eine ausgesuchte untere Kontrolleinheit (3) einen Änderungsbefehl zur Änderung des Zustandes des zugehörigen Teilnetzes (1) auszugeben, wobei eine Änderung des Zustands des zugehörigen Teilnetzes (1) mittels eines unteren Aktors (5) zugleich auch eine Änderung des Zustands des Hauptnetzes (2) bewirkt und wobei die ausgesuchte untere Kontrolleinheit (3) anhand der zusammengefassten Daten ausgesucht wird,
wobei der Änderungsbefehl wenigstens einen Leistungswert umfasst, wobei der Änderungsbefehl neben dem Leistungswert eine Aussage darüber enthält, ob das Teilnetz (1) den Leistungswert aufnehmen oder an das Hauptnetz (2) abgeben soll,
wobei die ausgesuchte untere Kontrolleinheit (3) ausgebildet ist, auf den Änderungsbefehl hin zu entscheiden, welche Änderungen innerhalb des Teilnetzes (1) zur Änderung des Zustandes des Hauptnetzes (2) vorgenommen werden,
wobei die obere Kontrolleinheit (4) und die untere Kontrolleinheit (3) derart ausgebildet sind, dass bei einem Ausfall der unteren Kontrolleinheit (3) die obere Kontrolleinheit (4) mit untergeordneten Elementen (5, 7, 12) der unteren Kontrolleinheit (3) kommuniziert.

## Claims

1. Method for regulating low- and medium-voltage networks, wherein at least one lower control unit (3) is respectively assigned to at least two sub-networks (1) of a main network (2), wherein an upper control unit (4) is assigned to the main network (2), wherein the main network (2) is a medium- or low-voltage network, wherein which the sub-networks (1) are low-voltage networks or low-voltage network sections, wherein the lower control units (3) are each connected to a plurality of lower actuators (5), which lower actuators (5) can change the state of the respective sub-network (1), wherein the lower control units (3) aggregate data of the respectively associated lower actuators (5), wherein the aggregated data are transmitted by the lower control units (3) to the upper control unit (4), wherein the upper control unit (4) evaluates a state of the main network (2),
**characterized in that**
the upper control unit (4), in the event of a state of the main network (2) meriting change, issues a change command to at least one selected lower control unit (3) to change the state of the associated sub-network (1), wherein a change in the state of the associated sub-network (1) simultaneously also causes a change in the state of the main network (2) by means of a lower actuator (5) and wherein the selected lower control unit (3) is selected based on the aggregated data,
wherein the change command comprises at least one power value, wherein the change command contains, in addition to the power value, a statement as to whether the sub-network (1) should accept the power value or pass it on to the main network (2),
wherein the selected lower control unit (3) decides, based on the change command, which changes are made within the sub-network (1) to change the state of the main network (2),
wherein, in the event of a failure of the lower control unit (3), the upper control unit (4) communicates with subordinate elements (5, 7, 12) of the lower control unit (3).

2. Method according to Claim 1, wherein the aggregated data comprise calculated control capacity reserves of the respective sub-network (1).

3. Method according to one of the Claims 1 or 2, wherein 5 % to 50 %, preferably 7 % to 30 % and, being particularly preferred, 10 % to 20 % of network participant nodes (6) have a sensor (7) for detecting a state of the sub-network (1) or the main network (2).

4. Method according to one of the Claims 1 to 3, wherein the upper control unit (4) decides, in the case of a state of the main network (2) meriting change, what measures are taken within the main network (2) to change the state of the main network (2).

5. Method according to one of the Claims 1 to 4, wherein the upper control unit (4) is connected to a transformer network (8) or a local network station (9).

6. Method according to one of the Claims 1 to 5, wherein the lower control unit (3) is connected to a local network station (9) or to a cable distributor cabinet (10).

7. Method according to one of the Claims 1 to 6, wherein a plurality of upper control units (4) are provided, wherein the upper control units (4) are assigned to a control room (11).

8. Method according to one of the Claims 1 to 7, wherein subordinate control units (12) are assigned to at least one lower control unit (3).

9. Method according to one of the Claims 1 to 8, wherein at least one network participant has a participant control unit (14).

10. Method according to one of the Claims 1 to 9, wherein an electricity exchange is provided.

11. Apparatus for controlling the low- and medium-voltage networks, wherein at least one lower control unit (3) is assigned to at least two sub-networks (1) of a main network (2), wherein an upper control unit (4) is assigned to the main network (2), wherein the main network (2) is a medium or low-voltage network, wherein the sub-networks (1) are low-voltage networks or low-voltage network sections, wherein the lower control units (3) are each connected to a plurality of lower actuators (5), which lower actuators (5) can change the state of the respective sub-network (1), wherein the lower control units (3) are designed to aggregate data of the associated lower actuators (5) and transmit them to the upper control unit (4), wherein the upper control unit (4) is designed to assess a state of the main network (2),
**characterized in that**
the upper control unit (4), in the event of a state of the main network (2) meriting change, is designed to issue a change command to at least one selected lower control unit (3) to change the state of the associated sub-network (1), wherein a change in the state of the associated sub-network (1) simultaneously also causes a change in the state of the main network (2) by means of a lower actuator (5) and wherein the selected lower control unit (3) is selected based on the aggregated data,
wherein the change command comprises at least one power value, wherein the change command contains, in addition to the power value, a statement as to whether the sub-network (1) should accept the power value or pass it on to the main network (2),
wherein the selected lower control unit (3) is designed to decide, based on the change command, which changes are made within the sub-network (1) to change the state of the main network (2),
wherein the upper control unit (4) and the lower control unit (3) are designed in such a way that, in the event of a failure of the lower control unit (3), the upper control unit (4) communicates with subordinate elements (5, 7, 12) of the lower control unit (3).

## Revendications

1. Procédé, destiné à la régulation de réseaux basse et moyenne tension, à au moins deux sous-réseaux (1) d'un réseau principal (2) étant chaque fois associée au moins une unité de contrôle inférieure (3), une unité de contrôle supérieure (4) étant associée au réseau principal (2), le réseau principal (2) étant un réseau moyenne ou basse tension, les sous-réseaux (1) étant des réseaux basse tension ou des tronçons de réseaux basse tension, les unités de contrôle inférieures (3) étant respectivement connectées sur une pluralité d'actionneurs inférieurs (5), lesquels actionneurs inférieurs (5) étant susceptibles de modifier l'état du sous-réseau (1) respectif, les unités de contrôle inférieures (3) regroupant des données des actionneurs inférieurs (5) respectivement associés, les données regroupées étant transmises par les unités de contrôle inférieures (3) à l'unité de contrôle supérieure (4), l'unité de contrôle supérieure (4) évaluant un état du réseau principal (2),
**caractérisé en ce que**
dans le cas d'un état du réseau principal (2) nécessitant une modification, l'unité de contrôle supérieure (4) délivre à l'attention d'au moins une unité de contrôle inférieure (3) sélectionnée un ordre de modification, destiné à modifier l'état du sous-réseau (1) correspondant, une modification de l'état du sous-réseau (1) correspondant au moyen d'un actionneur inférieur (5) provoquant simultanément aussi une modification de l'état du réseau principal (2) et l'unité de contrôle inférieure (3) sélectionnée étant sélectionnée à l'aide des données regroupées,
l'ordre de modification comprenant au moins une valeur de puissance, l'ordre de modification contenant, hormis la valeur de puissance une déclaration sur le fait si le sous-réseau (1) doit reprendre la valeur de puissance ou la restituer au réseau principal (2),
suite à l'ordre de modification, l'unité de contrôle inférieure (3) décidant quelles sont les modifications qui sont apportées à l'intérieur du sous-réseau (1) pour modifier l'état du réseau principal (2),
dans le cas d'une panne de l'unité de contrôle inférieure (3), l'unité de contrôle supérieure (4) communiquant avec des éléments subordonnés (5, 7, 12) de l'unité de contrôle inférieure (3).

2. Procédé selon la revendication 1, les données regroupées comprenant des réserves de capacité de commande calculées du sous-réseau (1) respectif.

3. Procédé selon l'une quelconque des revendications 1 ou 2, de 5 % à 50 %, de préférence de 7 % à 30 % et de manière particulièrement préférentielle, de 10 % à 20 % de nœuds d'abonnés au réseau (6) comportant un capteur (7), destiné à détecter un état du sous-réseau (1) ou du réseau principal (2).

4. Procédé selon l'une quelconque des revendications 1 à 3, dans le cas d'un état du réseau principal (2) nécessitant une modification, l'unité de contrôle supérieure (4) décidant quelles sont les actions engagées à l'intérieur du réseau principal (2) pour modifier l'état du réseau principal (2).

5. Procédé selon l'une quelconque des revendications 1 à 4, l'unité de contrôle supérieure (4) étant connectée sur un poste de transformation (8) ou sur une sous-station de distribution locale (9).

6. Procédé selon l'une quelconque des revendications 1 à 5, l'unité de contrôle inférieure (3) étant connectée sur une sous-station de distribution locale (9) ou sur une armoire de distribution de câbles (10).

7. Procédé selon l'une quelconque des revendications 1 à 6, une pluralité d'unités de contrôle supérieures (4) étant prévue, les unités de contrôle supérieures (4) étant associées à une salle de commande (11).

8. Procédé selon l'une quelconque des revendications 1 à 7, à une unité de contrôle inférieure (3) étant associées des unités de contrôle subordonnées (12).

9. Procédé selon l'une quelconque des revendications 1 à 8, au moins un abonné au réseau comportant une unité de contrôle d'abonné (14).

10. Procédé selon l'une quelconque des revendications 1 à 9, une bourse de l'électricité étant prévue.

11. Dispositif, destiné à la régulation de réseaux basse et moyenne tension, à au moins deux sous-réseaux (1) d'un réseau principal (2) étant associée au moins une unité de contrôle inférieure (3), une unité de contrôle supérieure (4) étant associée au réseau principal (2), le réseau principal (2) étant un réseau moyenne ou basse tension, les sous-réseaux (1) étant des réseaux basse tension ou des tronçons de réseaux basse tension, les unités de contrôle inférieures (3) étant respectivement connectées sur une pluralité d'actionneurs inférieurs (5), lesquels actionneurs inférieurs (5) étant susceptibles de modifier l'état du sous-réseau (1) respectif, les unités de contrôle inférieures (3) regroupant des données des actionneurs inférieurs (5) respectivement associés, les données regroupées étant transmises par les unités de contrôle inférieures (3) à l'unité de contrôle supérieure (4), l'unité de contrôle supérieure (4) évaluant un état du réseau principal (2),
**caractérisé en ce que**
dans le cas d'un état du réseau principal (2) nécessitant une modification, l'unité de contrôle supérieure (4) est conçue pour délivrer à l'attention d'au moins une unité de contrôle inférieure (3) sélectionnée un ordre de modification, destiné à modifier l'état du sous-réseau (1) correspondant, une modification de l'état du sous-réseau (1) correspondant au moyen d'un actionneur inférieur (5) provoquant simultanément aussi une modification de l'état du réseau principal (2) et l'unité de contrôle inférieure (3) sélectionnée étant sélectionnée à l'aide des données regroupées,
l'ordre de modification comprenant au moins une valeur de puissance, l'ordre de modification contenant, hormis la valeur de puissance une déclaration sur le fait si le sous-réseau (1) doit reprendre la valeur de puissance ou la restituer au réseau principal (2),
suite à l'ordre de modification, l'unité de contrôle inférieure (3) étant conçue pour décider quelles sont les modifications qui sont apportées à l'intérieur du sous-réseau (1) pour modifier l'état du réseau principal (2),
l'unité de contrôle supérieure (4) et l'unité de contrôle inférieure (3) étant conçues de telle sorte que dans le cas d'une panne de l'unité de contrôle inférieure (3), l'unité de contrôle supérieure (4) communique avec des éléments subordonnés (5, 7, 12) de l'unité de contrôle inférieure (3).
